# EUROPÄISCHE PATENTANMELDUNG

(11) **EP 0 816 216 A1**
(43) Veröffentlichungstag der Anmeldung: **07.01.1998**
(21) Anmeldenummer: 97111188.5
(22) Anmeldetag: 03.07.1997
(51) Int. Cl.: B62M 23/02

(54) **Fahrrad mit elektrischem Hilfsantrieb**

(30) Priorität: 03.07.1996 JP 173789/96; 04.07.1996 JP 174945/96; 04.07.1996 JP 174944/96; 05.07.1996 JP 176229/96
(71) Anmelder: YAMAHA HATSUDOKI KABUSHIKI KAISHA, Iwata-shi Shizuoka-ken, 438 (JP)
(72) Erfinder: Yamamoto, Satoshi, Iwata-shi, Shizuoka-ken (JP)
(74) Vertreter: Grünecker, Kinkeldey, Stockmair & Schwanhäusser Anwaltssozietät

(57) **Abstract**

An electric motor-assisted bicycle comprises a power unit for outputting a pedal force inputted to a crankshaft and/or an assisting force received from an electric motor (21). A control unit (24) is provided for variably controlling the assisting force in accordance with running conditions detected. Said control unit (24) comprises model-independent control data of said bicycle (1). Further, a model discrimination unit (40) is provided separately from said control unit, said model discrimination unit containing data specific to the model of bicycle.

## Beschreibung

The present invention relates to an electric motor-assisted bicycle comprising a power unit for outputting a pedal force inputted to a crankshaft and/or an assisting force received from an electric motor and a control unit for variably controlling the assisting force in accordance with running conditions detected.

Conventional electric motor-assisted bicycles are known in which a resultant force consisting of a pedaling force input to a pedal and an assistant driving force from an electric motor is supplied to a wheel
Such a motor assisted bicycle has a power unit for outputting a force consisting of a pedaling force and/or an assisting force from an electric motor, a pedaling force detector for detecting the pedaling force and a control unit for variably controlling the output of said electric motor in accordance with a detected value of said pedaling force.

A number of models of motor assisted bicycles of this type are manufactured which are different in performance. In this case, differences in reduction gear ratios, tire diameters, crank lengths, etc. that vary from model to model are handled by differently specifying performance data in control units using such differences as differences in performance between models. Further, a different harness and coupler are used for the control unit of each model to prevent errors in assembly.

However, providing a control unit specific to each model as done in the past as described above increases the types of control unit, which results in problems in that it involves complicated management and in that it increases the cost to develop control units.

Further, the method of providing a different harness and coupler for each model as done in the past as described above results in a problem in that it is difficult for this method to support a required number of models.

Accordingly, it is an objective of the present invention to provide an electric motor-assisted bicycle as indicated above which simplifies the management of components especially of the control unit and simultaneously ensures an always reliable control of said bicycle.

According to the present invention, this objective is solved for an electric motor-assisted bicycle as indicated above in that said control unit comprises model-independent control data of said bicycle and that a model discrimination unit is provided separately from said control unit, said model discrimination unit containing data specific to the model of bicycle, respectively.

In order to further simplify the respective controlling units, it is advantageous when a memory, which may be an EEPROM or flash memory of said model discrimination unit, is sealed to prevent an external reloading of said memory. This has the advantage that in addition said model discrimination unit may be produced in mass production for all kinds of bicycles and may be loaded only prior to being mounted to the respective bicycles. The respective seal then prevents an external reloading of this memory.

According to another embodiment of the invention, said vehicle discrimination unit includes a model identification code defined on the basis of the year of manufacture and said control unit initiates the control operation when a model identification code contained therein coincides with the model identification code from said vehicle discrimination unit. An arrangement may be made such that the control operation is not initiated or is stopped when the identification codes do not coincide.

In order to further enhance the simplification, it is advantageous when said vehicle discrimination unit is mounted to a vehicle body frame, a convex portion and a concave portion formed in a fitting relationship which depends on the model fit each other between said vehicle discrimination unit and vehicle body frame.

Other preferred embodiments of the present invention are laid down in further dependent claims.

In the following, the present invention is explained in greater detail with respect to several embodiments thereof in conjunction with the accompanying drawings, wherein:
Fig. 1 is a left side view of a motor assisted bicycle according to a mode for carrying out the inventions;
Fig. 2 is a left side view of a driving device of said motor assisted bicycle;
Fig. 3 is a right side view of said driving device;
Fig. 4 is a plan view of said driving device;
Fig. 5 is a schematic view of a memory portion of a vehicle discrimination unit of said motor assisted bicycle;
Fig. 6 is a schematic plan view of said vehicle discrimination unit;
Fig. 7 is a schematic side view of said vehicle discrimination unit;
Fig. 8 is functional block diagrams of said control unit and vehicle discrimination unit; and
Fig. 9 is a flow chart showing an operation of said control unit.

A mode for carrying out the invention will now be described based on the accompanying drawings.

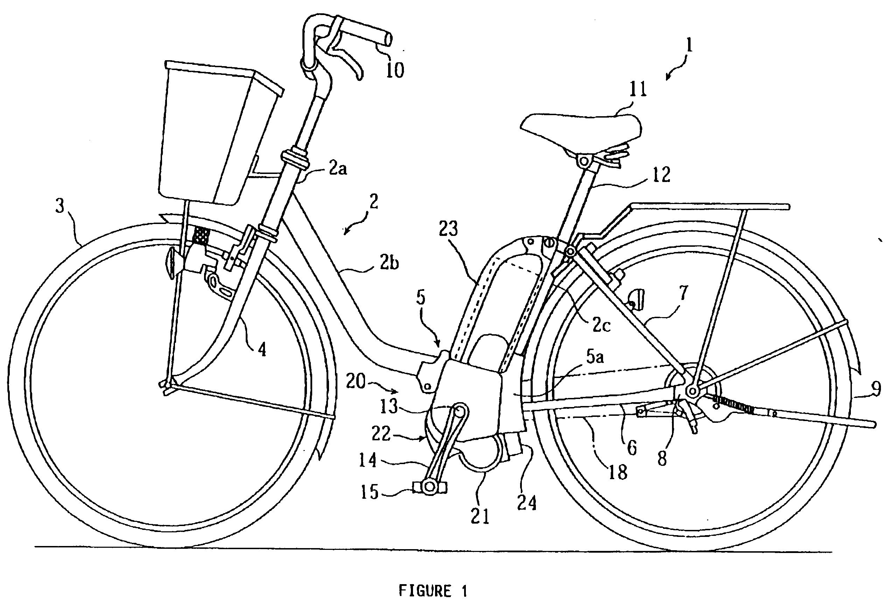

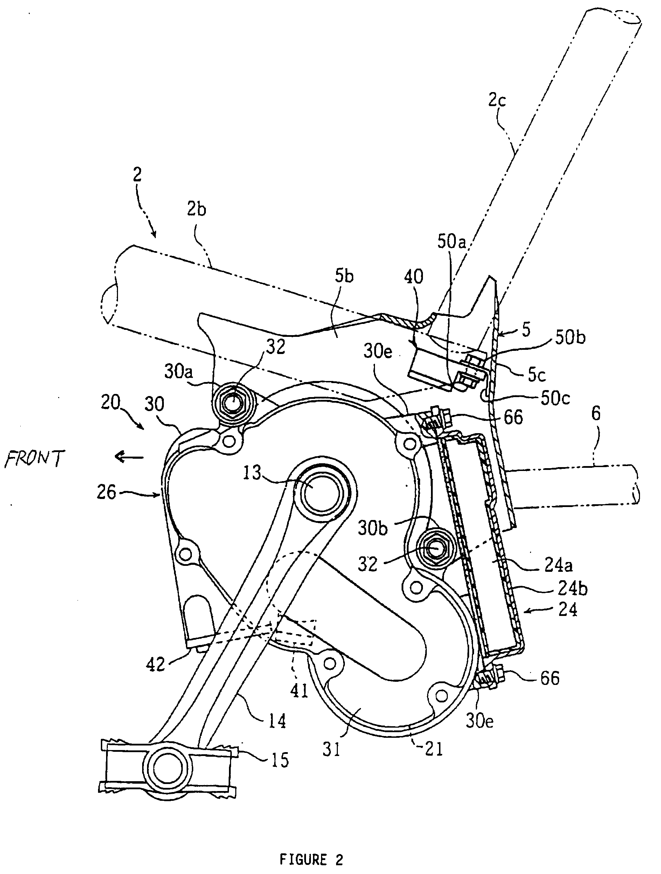

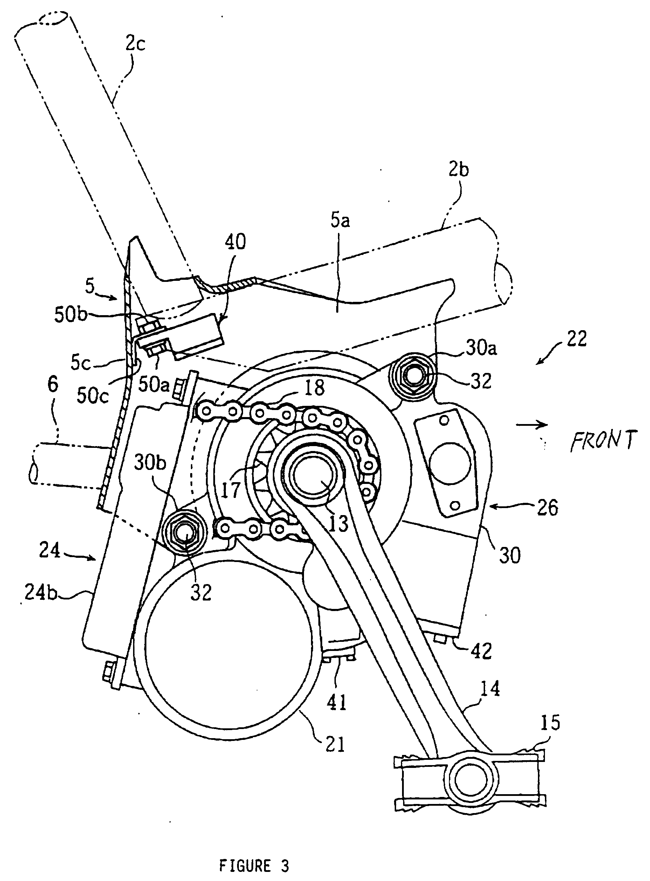

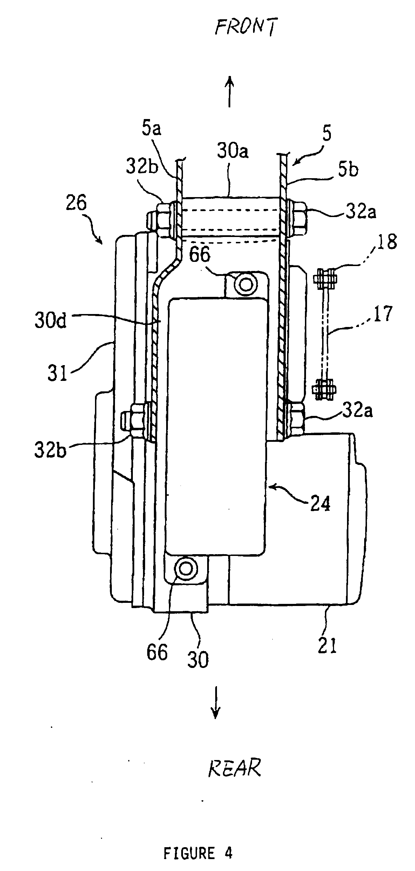

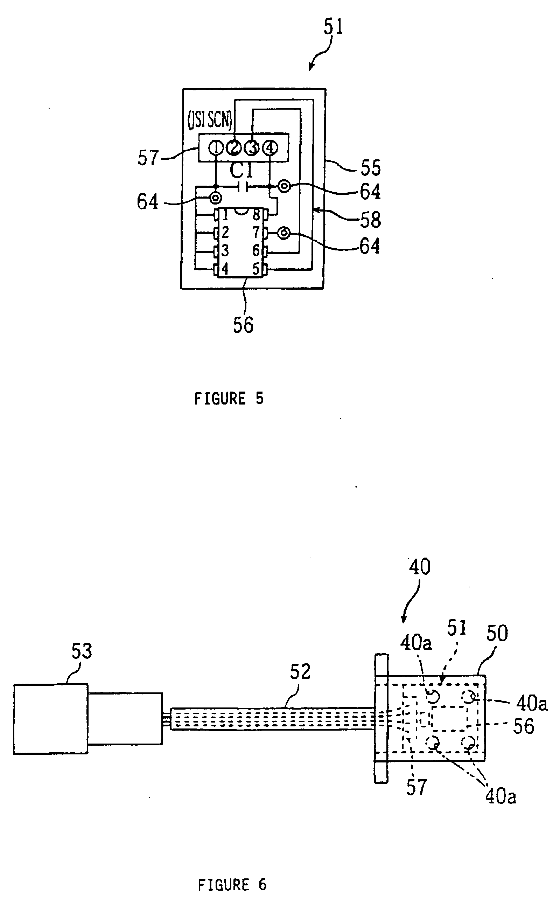

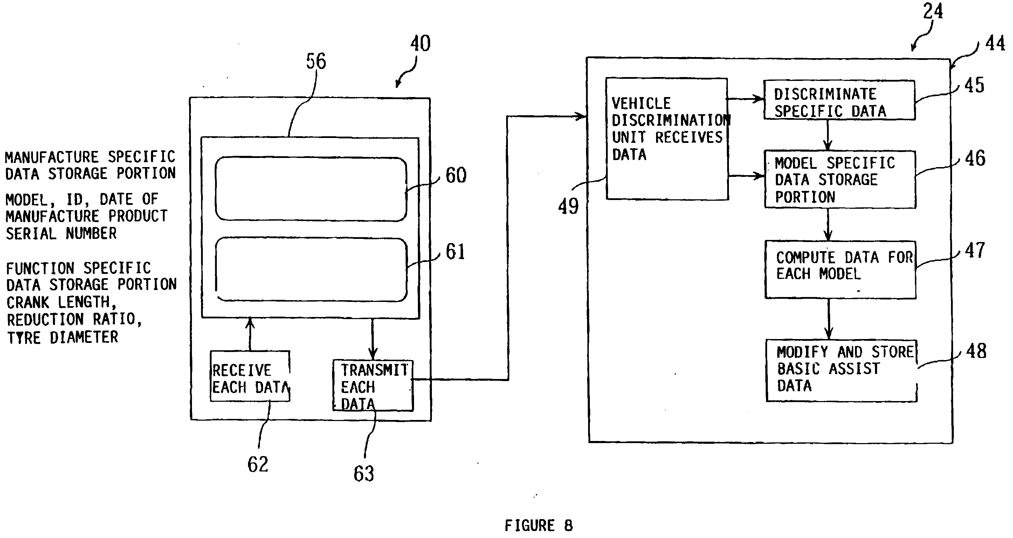

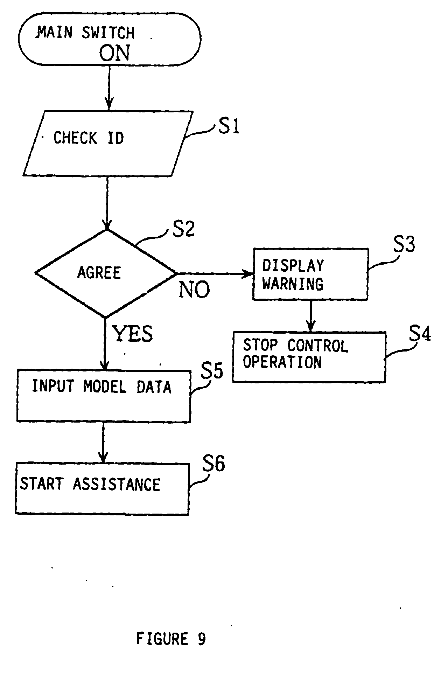

Figs. 1 through 9 are views for explaining a motor assisted bicycle according to a mode for carrying out the present Invention; Fig. 1 is a left side view of the motor assisted bicycle; Figs. 2 through 4 are a left side view, a right side view and a plan view, respectively, showing a power unit loaded on the vehicle body; each of Figs. 5 through 7 is a schematic view of a vehicle discrimination unit; Fig. 8 is a block configuration diagram for explaining a control operation; and Fig. 9 is a flow chart for explaining the control operation. The terms "front", "rear", "left" and "right" in the context of this mode of carrying out the invention mean the front, rear, left and right as viewed by a person who rides on a bicycle.

Throughout the drawings, 1 designates a motor assisted bicycle whose vehicle body frame 2 is formed by integrally connecting a head pipe 2a for rotatably supporting a front fork 4 by which a front wheel 3 is rotatably supported, a main tube 2b extending rearward and diagonally downward from said head pipe 2a, and a seat tube 2c erected upright from a rear end portion of said main tube 2b.

A mounting bracket 5 is welded and secured to the portion where said main tube 2b and seat tube 2c are connected. Said bracket 5 is arcuate when viewed laterally and is constituted by a sheet metal, formed to have a substantially U-shaped transverse section, consisting of left and right side walls 5a, 5b covering the left and right sides of the tube connecting portion and an upper wall 5c covering the gap between said side walls in a range extending rearward of and above the same.

Front end portions of a pair of left and right chain stays 6 extending toward the rear of the vehicle body are connected to said bracket 5, and a rear end portion of each chain stay 6 and an upper end portion of said seat tube 2c are connected by a pair of left and right seat stays 7. The chain stays 6 and seat stays 7 are integrally connected through a rear wheel bracket 8, and a rear wheel 9 is rotatably supported by said bracket 8. A handle 10 is attached to an upper end of said front fork 4, and a seat pillar tube 12 having a saddle 11 attached thereto is inserted in the upper end of said seat tube 2c such that its height can be adjusted.

A driving device 20 is suspended and supported by said mounting bracket 5. This driving device 20 includes a manual driving mechanism for driving the rear wheel 9 for rotation utilizing a pedaling force input to a crank shaft 13 and an electrical driving mechanism for driving the rear wheel 9 for rotation utilizing an assisting force from an electric motor 21.

Said manual driving mechanism has a configuration in which the crank shaft 13 is inserted through a power unit 22 secured to said mounting bracket 5 in the direction of the vehicle width and is rotatably arranged; cranks 14 are securely attached to both ends of said crank shaft 13; pedals 15 are rotatably attached to the ends of said cranks 14; and a pedaling force input to said crank 13 is thus transmitted to the rear wheel 9 through a chain sprocket 17 and a chain 18.

Said electrical driving mechanism includes the power unit 22 for outputting a resultant force consisting of the assisting force from the electric motor 21 and said pedaling force, a battery 23 for supplying a power source to said electric motor 21, a control unit 24 for variably controlling the assisting force from said electric motor 21, and a vehicle discrimination unit 40 provided separately from said control unit 24.

Said battery 23 has a substantially rectangular configuration and contains a multiplicity of series-connected Ni-Cd electric cells therein. Said battery 23 is arranged and secured on the front side of said seat tube 2c along the longitudinal direction thereof. The battery 23 includes a discharge terminal and a charge terminal (not shown) which are connected to the motor when loaded on the vehicle, and the battery 23 is arranged such that it can be charged in an on-vehicle state and in a residence or the like after removing it from the vehicle body.

Said power unit 22 is configured by providing a planetary gear type acceleration mechanism and a reduction gear mechanism which are not shown in a unit case 26 made of aluminum die-cast. Said unit case 26 is formed by a case main body 30 and a lid member 31 for closing an opening formed on a left side wall of said case body 30, and said lid member 31 is screwed and secured to the case main body 30.

Boss portions 30a, 30b extending in the direction of the vehicle width are integrally formed respectively on a front portion and a rear portion of an upper wall of said case main body 30. The case main body 30 is fastened and secured to the mounting bracket 5 by inserting bolts 32a, 32a therein and screwing nuts 32b, 32b thereon with said boss portions 30a, 30b positioned between left and right side walls 5a, 5b of said bracket 5.

Said crank shaft 13 is inserted in said unit case 26 such that both ends thereof protrude externally from the case, and a chain sprocket 17 is coupled to a right end portion of an output shaft attached to said crank shaft 13 through a bearing. Said sprocket 17 is connected to said rear wheel 9 through the chain 18.

Further, the electric motor 21 is secured to a lower end portion of said case main body 30 by means of bolting, and a rotating shaft of said electric motor 21 is connected to said output shaft through said reduction gear mechanism disposed in the case main body 30, whereby the driving force of the electric motor 21 is transmitted to the output shaft through the reduction gear mechanism where it is combined with the pedaling force from the crank shaft 13 to be transmitted to said rear wheel 9.

A vehicle speed sensor 41 and a pedaling force sensor 42 are disposed at a lower portion of said case main body 30. The vehicle speed sensor 41 detects the speed of rotation of the crank shaft 13 and outputs said detected value to said control unit 24. Said pedaling force sensor 42 detects the pedaling force Input to the crank shaft 13 and outputs said detected value to the control unit 24.

Said control unit 24 is formed by a unit main body 24a and a control box 24b for containing the same, and said control box 24b is detachably fastened and secured to a boss 30e protruding from the case main body 30 using a bolt 66. An upper half of said control unit 24 is located within said mounting bracket 5 and is surrounded by the left and right side walls 5a, 5b and the upper wall 5c.

Said vehicle discrimination unit 40 is inserted and arranged in an opening at the lower end of said main tube 2b and is secured to a support piece 50c bonded to the upper wall 5c of said mounting bracket 5 with a bolt 50a and a nut 50b. The vehicle discrimination unit 40 is mounted to said support piece 50c before the driving device 20 is mounted to the mounting bracket 5 and is surrounded by the main tube 2b and the mounting bracket 5.

Said vehicle discrimination unit 40 has a configuration in which a unit main body 51 is contained in a case 50. A coupler 53 is connected to said unit main body 51 through a harness 52, and said couple 53 is connected to said control unit 24.

Said unit main body 51 is configured by connecting a memory 56 and a connector 57 mounted on a board 55 with wiring 58 patterned on said board 55. An EEPROM or a flash memory for which stored data can be reloaded is employed as the memory 56, and said harness 52 is connected to said connector 57. 64 designates inspection terminals which are put in contact with probes of an inspection machine during a product conduction test or the like at a manufacturing step, and data are reloaded through said inspection terminals 64. Said board 55 and the components 56, 57 and the like loaded thereon are sealed with resin after said reloading of data is carried out to disable the reloading of data thereafter.

Said discrimination unit 40 includes said memory 56, a data receiving function 62 for accepting data when the data in the memory 56 are reloaded through said inspection terminals 64, and a data transmitting function 63 for transmitting specific data in the memory 56 to the control unit 24 when control of the assisting force of the vehicle is performed.

Said memory 56 includes a manufacture specific data storage portion 60 for storing manufacture data on a model basis such as type of the vehicle, ID, data of manufacture and product serial number and a performance specific data storage portion 61 for storing performance data on a model basis such as the crank length, reduction ratio and tire diameter.

Since said reloading of data is carried out at the time of shipment of the discrimination unit 40 and said resin sealing is performed thereafter, the reloading of said data is disabled after loading to a vehicle to prevent unauthorized modification.

Said control unit 24 includes a data receiving function 49 for receiving the specific data from said discrimination unit 40, a specific data discrimination function 45 for discriminating whether said received specific data are acceptable or not, a specific data storage portion 46 for storing the received specific data if acceptable, a computing function 47 for performing setting of the range of assisted driving, calculation of a motor current value and the like based on the specific data, a function 48 of modifying and storing basic assist data, etc.

Based on said specific data, the pedaling force from said pedaling force sensor 42, the vehicle speed from said vehicle speed sensor 41, and the like, said discrimination unit 40 and control unit 24 obtain an assistant driving force, and a current in accordance with said assistant driving force is supplied from the battery 23 to the electric motor 21. For example, said assistant driving force is set in a substantially 1:1 relationship to a pedaling force of 1 of a rider for a vehicle speed in the range from 0 to 15 Km/h and is controlled such that it begins to decrease gradually when the vehicle speed exceeds 15 Km/h and becomes zero when the vehicle speed reaches 24 Km/h.

As shown in the flow chart in Fig. 9, the control unit 24 according to this mode for carrying out the invention reads the manufacture specific data and performance specific data from the discrimination unit 40 in response to the input of a main switch on signal, checks whether an ID code (model identification code) in said specific data agrees with an ID code at the control unit 24, and provides a warning display and stops the control operation if those codes do not agree (steps S1 through S4). Meanwhile, if those codes agree at said step S2, it performs assist control based on the model specific data (steps S5, S6).

As described above, according to the present mode for carrying out the invention, since control data such as a basic control program common to different models are contained in the control unit 24 and a vehicle discrimination unit 40 having control data specific to each model is separately and independently provided, the control unit 24 can be commonly used for all models, which simplifies the management of the same and allows a reduction in development cost because there is no need for developing a control unit for each model. Further, since discrimination between models does not rely on couplers, a common coupler can be provided and a cost reduction can be achieved also on this point.

Further, since model specific data are loaded in the vehicle discrimination unit 40, it is possible to set precisely not only performance specific data but also manufacture specific data such as the year of manufacture, ID code and product serial number, and this allows an increase in models to be easily accommodated.

In addition, since said vehicle discrimination unit 40 is arranged in the main tube 2b and is surrounded by the mounting bracket 5, it is possible to prevent removal from the outside and to mechanically prevent modification by replacing said discrimination unit 40 itself with a discrimination unit for another model. Furthermore, since the discrimination unit 40 is sealed with resin, it is possible to electrically prevent modification of the same by means of reloading after the shipment of the vehicle.

Since the exchange of data between said discrimination unit 40 and control unit 24 is performed utilizing electrical signals, the problem of reduction in responsibility (assisting performance) in control over an assisting force can be avoided by providing the discrimination unit separately to maintain marketability.

According to the present mode for carrying out the invention, since the memory 56 of the vehicle discrimination unit 40 can be externally reloaded, it is possible to reload the data easily and to change the format of the data easily.

Further, since the ID and date of manufacture specific to a model is loaded in said vehicle discrimination unit 40 and said ID agrees an ID in the control unit 24, discrimination can be made on the basis of the year of manufacture to prevent modification. Furthermore, when a control unit is replaced with a new one, the ID in said control is also changed. This allows discrimination from an old model.

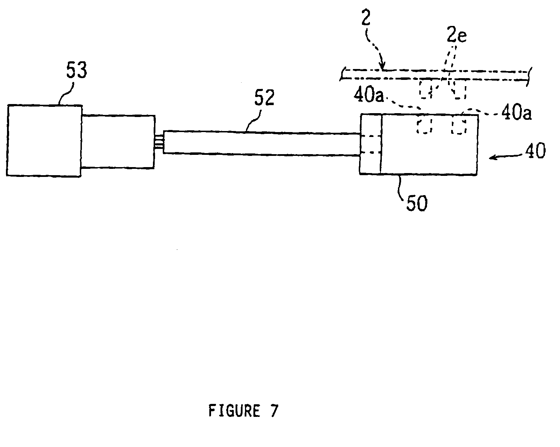

For mounting of the vehicle discrimination unit 40 on the vehicle body frame 2, an arrangement is possible in which the mounting relationship between the vehicle discrimination unit and the vehicle body frame is varied for each model. For example, as indicated by the two-dot chain lines in Figs. 6 and 7, the vehicle discrimination unit 40 is formed with four fitting holes 40a ..., and the vehicle body frame 2 is formed with four protrusions 2e ... which are fitted and inserted in the respective fitting holes 40a .... Then, the quantities, positions, depths and the like of said fitting holes and fitting protrusions are varied for each model.

Such a configuration makes it possible to prevent errors in assembling a vehicle discrimination unit and to more reliably prevent a vehicle discrimination unit 40 from being replaced with one for a different model.

As described above, in a motor assisted vehicle according to an embodiment of the invention, since the control unit containing control data common to various models and the vehicle discrimination unit containing control data specific to each model are separately provided, there is provided an effect that the control unit can be commonly used to allow mass production and to simplify the management of components. Further, there is provided an effect that the need for developing a control unit for each model to allow a common coupler to be provided and to allow a cost reduction.

According to another embodiment of the invention, since the memory in the vehicle discrimination unit allows external reloading of the data therein and is sealed with resin, there is provided an effect that the data can be easily reloaded during manufacture, and modification by means of reloading can be prevented after the shipment of a vehicle.

According to a further embodiment of the invention, since the control operation is not initiated or is stopped when the model identification code in the vehicle discrimination unit and the model identification code in the control unit do not agree, there is an effect that it is possible to prevent modification by means of reloading reliably.

According to a still further embodiment of the invention, since the vehicle discrimination unit and the vehicle body frame are fitted to each other at the convex portion and concave portion formed in a fitting relationship that varies depending on the model, there is an effect that it is possible to prevent errors in mounting a vehicle discrimination unit and to prevent a discrimination unit for different model from being mounted.

## Claims

1. An electric motor-assisted bicycle (1) comprising a power unit (22) for outputting a pedal force inputted to a crankshaft (13) and/or an assisting force received from an electric motor (21) and a control unit (24) for variably controlling the assisting force in accordance with running conditions detected, **characterized in that** said control unit (24) comprises model-independent control data of said bicycle (1) and that a model discrimination unit (40) is provided separately from said control unit (24), said model discrimination unit (40) containing data specific to the model of bicycle (1), respectively.

2. An electric motor-assisted bicycle according to claim 1, **characterized in that** a memory (56) of said model discrimination unit (40) is sealed to prevent an external reloading of said memory (56).

3. An electric motor-assisted bicycle according to claim 2, **characterized in that** said memory is a EEPROM or flash memory (56).

4. An electric motor-assisted bicycle according to at least one of the preceding claims 1 to 3, **characterized in that** said model discrimination unit (40) comprising a unit main body (51) received in a case (50), that a coupler (53) being connected to said unit main body (51) through a harness (52) as well as to said control unit (24).

5. An electric motor-assisted bicycle according to at least one of the preceding claims 1 to 4, **characterized in that** said model discrimination unit (40) including manufacture specific data as well as performance specific data of said bicycle (1) and that said control unit (24) being adapted to receive said specific data and to discriminate whether said received specific data is acceptable.

6. An electric motor-assisted bicycle according to claim 5, **characterized in that** said control unit (24) is adapted to store accepted specific data for performing the control function.

7. An electric motor-assisted bicycle according to at least one of the preceding claims 1 to 6, **characterized in that** said specific data of said model discrimination unit (40) includes a first model identification code defined on the basis of the date, in particular year of production and of the type of bicycle, and that said control unit (24) initiates the control operation when a second model identification code stored therein coincides with said first model identification code from said model discrimination unit (40).

8. An electric motor-assisted bicycle according to at least one of the preceding claims 1 to 7, **characterized in that** said model discrimination unit (40) is configured such that it is only connectable to its respective specific bicycle (1).

9. An electric motor-assisted bicycle according to claim 8, **characterized in that** said model discrimination unit (40) is formed with a plurality of fitting holes (40a), and a body frame (2) of said bicycle (1) is formed with a respective plurality of protrusions (2e) received in said fitting holes (40a).

10. An electric motor-assisted bicycle according to at least one of the preceding claims 1 to 9, **characterized in that** said control unit (24) being fastened to the outer surface of a casing (26) accommodating said power unit.

11. An electric motor-assisted bicycle according to at least one of the preceding claims 1 to 10, **characterized in that** said control unit (24) is adapted to calculate the magnitude of the auxiliary drive force according to an auxiliary drive force control map.

12. An electric motor-assisted bicycle according to at least one of the preceding claims 1 to 11, **characterized in tha**t said control unit (24) is adapted to set said auxiliary drive force such that a ratio of the auxiliary drive force to the pedal force exerted a rider is nearly one to one for a vehicle speed in a range of 0 to 15 km/h, decreases gradually for the vehicle speed of above 15 km/h and is reduced to zero when the vehicle speed reaches 24 km/h.
